# EUROPÄISCHE PATENTANMELDUNG

(11) **EP 3 518 367 A1**
(43) Veröffentlichungstag der Anmeldung: **31.07.2019**
(21) Anmeldenummer: 18450001.5
(22) Anmeldetag: 25.01.2018
(51) Int. Cl.: H02J 3/32, H02J 5/00, H02J 9/06

(54) **STROMVERSORGUNGSANLAGE**

(71) Anmelder: XelectriX Power GmbH, 4310 Mauthausen (AT)
(72) Erfinder: Hartl, Alexander, A-4060 Leonding (AT)
(74) Vertreter: Keschmann, Marc

(57) **Zusammenfassung**

Bei einer Stromversorgungsanlage umfassend einen Eingangsanschluss für eine Wechselstromquelle, einen Ausgangsanschluss zum Anschließen einer elektrischen Last, den Eingangsanschluss mit dem Ausgangsanschluss verbindende Stromversorgungsleitungen, umfassend wenigstens einen Phasenleiter und einen Neutralleiter, und wenigstens einen Stromrichter mit einem Gleichstrom- und einem Wechselstromanschluss, wobei der Wechselstromanschluss mit der elektrischen Last verbindbar ist und wobei mit dem Gleichstromanschluss ein DC-Zwischenkreis verbunden ist, an den wenigstens ein aufladbarer elektrischer Energiespeicher angeschlossen ist, und wobei eine Steuereinrichtung vorgesehen ist, um die vom Stromrichter über den Wechselstromanschluss abgebbare Wechselspannung zu steuern, ist der Stromrichter mit seinem Wechselstromanschluss parallel zur Wechselstromquelle an die Stromversorgungsleitungen angeschlossen, wobei wenigstens eine Strommesseinrichtung und wenigstens eine Spannungsmesseinrichtung zur Messung von Strom- und Spannungswerten der Wechselstromquelle vorgesehen sind, welche der Steuereinrichtung zugeführt sind, um die vom Stromrichter abgegebene Wechselspannung in Abhängigkeit von den Strom- und Spannungswerten zu regeln.

## Beschreibung

Die Erfindung betrifft eine Stromversorgungsanlage umfassend einen Eingangsanschluss für eine Wechselstromquelle, einen Ausgangsanschluss zum Anschließen einer elektrischen Last, den Eingangsanschluss mit dem Ausgangsanschluss verbindende Stromversorgungsleitungen, umfassend wenigstens einen Phasenleiter und einen Neutralleiter, und wenigstens einen Stromrichter mit einem Gleichstrom- und einem Wechselstromanschluss, wobei der Wechselstromanschluss mit der elektrischen Last verbindbar ist und wobei mit dem Gleichstromanschluss ein DC-Zwischenkreis verbunden ist, an den wenigstens ein aufladbarer elektrischer Energiespeicher angeschlossen ist, und wobei eine Steuereinrichtung vorgesehen ist, um die vom Stromrichter über den Wechselstromanschluss abgebbare Wechselspannung zu steuern.

Aus dem Stand der Technik sind Stromversorgungsanlagen bekannt, die insbesondere in Bereichen, in denen keine Stromversorgung über das Stromnetz sichergestellt ist, bspw. auf Baustellen, in entlegenen Gebieten oder wenn das Stromnetz ausgefallen ist, eingesetzt werden, um verschiedenste Vorrichtungen autonom bzw. netzunabhängig mit Strom zu versorgen. Diese Stromversorgungsanlagen weisen im Wesentlichen einen Generator auf, der von einem Verbrennungsmotor, insbesondere einem Benzin- oder Dieselmotor angetrieben wird. An den Generator können die zu betreibenden Vorrichtungen angeschlossen und dadurch betrieben werden.

Aus dem Stand der Technik sind auch Systeme bekannt, bei denen der Generator über einen Gleichrichter an einen Stromkreis, bspw. einen DC-Zwischenkreis, angeschlossen ist und über diesen einen elektrischen Energiespeicher mit Strom versorgt. Dadurch ist es möglich, den Generator im optimalen Betriebspunkt zu betreiben. Weiters ist es bei solchen Systemen bekannt, weitere Stromerzeugungsanlagen, bspw. Photovoltaikanlagen oder Windturbinen an den DC-Zwischenkreis anzuschließen oder diese an Stelle des Generators einzusetzen.

Nachteilig bei diesen Systemen ist die Begrenzung der Höchstlast durch die Kapazität des Energiespeichers. Es muss daher der elektrische Energiespeicher relativ groß dimensioniert werden. Es sind daher Stromversorgungsanlagen bekannt, die zusätzlich ein Energieversorgungsnetz für den Fall nutzen können, dass ein solches verfügbar ist. Die Energieversorgungsanlage kann dann an das ggf. vorhandene Energieversorgungsnetz angeschlossen werden, um einerseits ein Aufladen des elektrischen Energiespeichers am Energieversorgungsnetz zu ermöglichen und um andererseits die elektrische Last direkt am Energieversorgungsnetz zu betreiben. Bei solchen Stromversorgungsanlagen sind, wie eingangs erwähnt, ein Eingangsanschluss für eine Wechselstromquelle, wie z.B. das Energieversorgungsnetz, ein Ausgangsanschluss zum Anschließen einer elektrischen Last, den Eingangsanschluss mit dem Ausgangsanschluss verbindende Stromversorgungsleitungen, umfassend wenigstens einen Phasenleiter und einen Neutralleiter, und wenigstens ein Stromrichter mit einem Gleichstrom- und einem Wechselstromanschluss vorgesehen, wobei der Wechselstromanschluss mit der elektrischen Last verbindbar ist und wobei mit dem Gleichstromanschluss ein DC-Zwischenkreis verbunden ist, an den wenigstens ein aufladbarer elektrischer Energiespeicher angeschlossen ist, und wobei eine Steuereinrichtung vorgesehen ist, um die vom Stromrichter über den Wechselstromanschluss abgebbare Wechselspannung zu steuern.

Nachteilig bei solchen Stromversorgungseinrichtungen ist jedoch, dass die elektrische Last nur eine einzige Stromquelle nützen kann, d.h. entweder durch das Stromversorgungsnetz oder durch den Stromrichter der Stromversorgungsanlage gespeist wird, sodass ein Kombinationsbetrieb nicht möglich ist. Weiters ist es mit herkömmlichen Anlagen nicht ohne weiteres möglich, ggf. überschüssige lokal verfügbare Energie, z.B. die durch eine Photovoltaikanlage bereitgestellte Energie, in das Stromversorgungsnetz einzuspeisen.

Die vorliegende Erfindung zielt daher darauf ab, eine Stromversorgungsanlage dahingehend weiterzubilden, dass eine größtmögliche Flexibilität hinsichtlich der Wahl der Versorgungsquelle besteht und ggf. überschüssige Energie in ein Versorgungsnetz eingespeist werden kann, sodass eine Vielzahl unterschiedlicher Betriebsmodi realisiert werden kann.

Zur Lösung dieser Aufgabe sieht die Erfindung bei einer Stromversorgungsanlage der eingangs genannten Art im Wesentlichen vor, dass der Stromrichter mit seinem Wechselstromanschluss parallel zur Wechselstromquelle an die Stromversorgungsleitungen angeschlossen ist und dass wenigstens eine Strommesseinrichtung und wenigstens eine Spannungsmesseinrichtung zur Messung von Strom- und Spannungswerten der Wechselstromquelle vorgesehen sind, welche der Steuereinrichtung zugeführt sind, um die vom Stromrichter abgegebene Wechselspannung in Abhängigkeit von den Strom- und Spannungswerten zu regeln.

Dadurch, dass der Stromrichter mit seinem Wechselstromanschluss parallel zur Wechselstromquelle an die Stromversorgungsleitungen angeschlossen ist, können elektrische Lasten wahlweise entweder direkt oder versorgungsparallel, d.h. zusätzlich zu einer Versorgung aus einer Wechselstromquelle, insbesondere einem Stromversorgungsnetz, aus einem Energiespeicher versorgt werden und der Energiespeicher kann bei Bedarf oder zur Ausgleichung von Laständerungen wieder geladen werden. Weiters wird dadurch die Möglichkeit geschaffen, ggf. überschüssige Energie in das Versorgungsnetz einzuspeisen.

Um einen versorgungsparallelen Modus zu ermöglichen, wird der Stromrichter bevorzugt so betrieben, dass der von diesem zur Verfügung gestellte Wechselstrom mit dem Wechselstrom der Wechselstromquelle, insbesondere dem Stromversorgungsnetz, synchronisiert wird. Dabei besteht jedoch das Problem, dass der Stromrichter auf Grund seiner parallelen Verschaltung nicht in der Lage ist, die Stromparameter, wie die Spannung, die Stromstärke, die Frequenz und die Phasenverschiebung, der Wechselstromquelle zu erfassen. Es ist daher erfindungsgemäß vorgesehen, dass wenigstens eine Strommesseinrichtung und wenigstens eine Spannungsmesseinrichtung zur Messung von Strom- und Spannungswerten der Wechselstromquelle vorgesehen sind, welche der Steuereinrichtung zugeführt sind, um die vom Stromrichter abgegebene Wechselspannung in Abhängigkeit von den Strom- und Spannungswerten zu regeln. Die Regelung erfolgt bevorzugt dahingehend, dass der vom Stromrichter zur Verfügung gestellte Wechselstrom hinsichtlich Spannung, Stromstärke und Frequenz und ggf. Phasenverschiebung mit dem Wechselstrom der Wechselstromquelle synchronisiert wird.

Um einen Betriebsmodus zu ermöglichen, in dem der elektrische Energiespeicher aufgeladen wird, ist bevorzugt vorgesehen, dass der Stromrichter als bidirektionaler Stromrichter ausgebildet ist. Der Stromrichter kann somit als Wechselrichter oder als Gleichrichter betrieben werden. Im Wechselrichterbetrieb wird der vom DC-Zwischenkreis gelieferte Gleichstrom in einen Wechselstrom gewandelt und der elektrischen Last zur Verfügung gestellt und/oder in das Versorgungsnetz rückgespeist. Im Gleichrichterbetrieb wird der von der Wechselstromquelle kommende Wechselstrom in Gleichstrom gewandelt und dem elektrischen Energiespeicher zugeführt.

Um eine derartige Rückladung des elektrischen Energiespeichers zu begünstigen, ist bevorzugt vorgesehen, die DC-Zwischenkreisspannung im Vergleich zur normalen Spannung zu überhöhen. Dies erfolgt bevorzugt durch Zwischenschalten einer Drosseleinrichtung zwischen dem Wechselstromanschluss des Stromrichters und der Wechselstromquelle. Die Spannungsüberhöhung ist jedenfalls dann erforderlich, wenn die Spannung im elektrischen Energiespeicher über der notwendigen DC-Zwischenkreisspannung liegt, welche zum Versorgen der elektrischen Last mit Wechselstrom notwendig ist, um eine möglichst verlustfreie Versorgung zu gewährleisten. Das Überhöhen der DC-Zwischenkreisspannung führt zu einem Energiefluss in Richtung des Energiespeichers.

Der elektrische Energiespeicher kann auf verschiedene Arten dargestellt werden. Wie an sich bekannt, kann die Speicherung für hohe Pendelleistungen und eine lange Lebensdauer per LIO Technologie oder Supercaps erfolgen. Es können aber auch andere Batterie- oder Speicherausführungen zum Einsatz kommen, wie z.B. NiNaCl, NiFe, Pb, oder Brennstoffzellen, und dgl.

Um den Betrieb der Stromversorgungsanlage z.B. an einem Dreiphasenwechselstromversorgungsnetz zu ermöglichen, ist bevorzugt vorgesehen, dass der Eingangsanschluss zum Anschließen einer Dreiphasenwechselstromquelle ausgebildet ist, wobei die den Eingangsanschluss mit dem Ausgangsanschluss verbindenden Stromversorgungsleitungen drei Phasenleiter und einen Neutralleiter umfassen.

Weiters ist hierbei der Stromrichter bevorzugt zur Umwandlung eines Gleichstroms in einen Dreiphasenwechselstrom und/oder zur Umwandlung eines Dreiphasenwechselstroms in einen Gleichstrom ausgebildet und der Wechselstromanschluss des Stromrichters ist als Dreiphasenwechselstromanschluss ausgebildet.

Bevorzugt ist vorgesehen, dass der Wechselstromanschluss, insbesondere der Dreiphasenwechselstromanschluss, über wenigstens einen Anpasstransformator an die Stromversorgungsleitungen angeschlossen ist. Der Anpasstransformator kann hierbei auf Seite der Stromversorgungsleitungen mittels Sternschaltung und auf Seite des Stromrichters mittels Dreiecksschaltung verschaltet sein.

Gemäß einer weiteren bevorzugten Ausbildung ist der Anpasstransformator unter Zwischenschaltung einer Drosseleinrichtung mit dem Wechselstromanschluss des Stromrichters verbunden. Dies ermöglicht es, eine Spannungsüberhöhung im DC-Zwischenkreis zu erwirken, um den elektrischen Energiespeicher effizient aufladen zu können.

Bevorzugt ist eine Schaltereinrichtung vorgesehen, um die Verbindung zwischen dem Wechselstromanschluss des Stromrichters und den Stromversorgungsleitungen wahlweise zu trennen oder zu schließen. Dadurch gelingt in einfacher Weise die Umschaltung zwischen verschiedenen Betriebsmodi, wobei der Stromrichter zu- oder weggeschalten werden kann.

Alternativ oder zusätzlich kann eine Schaltereinrichtung vorgesehen sein, um die elektrische Verbindung zwischen dem Eingangsanschluss und dem Ausgangsanschluss über den wenigstens einen Phasenleiter wahlweise zu trennen oder zu schließen.

Um eine automatische Umschaltung zwischen verschiedenen Betriebsmodi in Abhängigkeit von vorgegebenen Steuerabläufen zu erlauben, ist bevorzugt vorgesehen, dass die Schaltereinrichtung von der Steuereinrichtung umschaltbar ist.

Um externe Gleichstromquellen anschließen zu können, ist bevorzugt vorgesehen, dass der DC-Zwischenkreis einen Anschluss zum Anschließen einer Gleichspannungsquelle, wie z.B. einer Photovoltaikanlage, aufweist, wobei die Gleichspannungsquelle bevorzugt unter Zwischenschaltung eines Gleichspannungswandlers anschließbar ist.

Hinsichtlich der Realisierung von verschiedenen Betriebsmodi ist beispielsweise vorgesehen, dass die Steuereinrichtung ausgebildet ist, um zwischen einem ersten Betriebsmodus und einem zweiten Betriebsmodus der Stromversorgungsanlage zu wechseln, wobei im ersten Betriebsmodus die elektrische Energie der Wechselstromquelle über die Stromversorgungsleitungen der elektrischen Last und dem Stromrichter zugeführt ist, welcher als Gleichrichter betrieben ist und den DC-Zwischenkreis mit Gleichstrom versorgt und den elektrischen Energiespeicher auflädt, und im zweiten Betriebsmodus die elektrische Last durch Auftrennen der elektrischen Verbindung zwischen dem Eingangsanschluss und dem Ausgangsanschluss vom Stromrichter mit Wechselstrom versorgt wird, wobei der Stromrichter als Wechselrichter betrieben ist und dem Stromrichter über den DC-Zwischenkreis Gleichstrom aus dem elektrischen Energiespeicher zugeführt wird. Die Stromversorgungsanlage kann hierbei z.B. entsprechend dem in den Ausführungsbeispielen näher erläuterten Modus "USV Betrieb" funktionieren.

Ergänzend oder alternativ kann die Steuereinrichtung ausgebildet sein, um zwischen einem dritten und einem vierten Betriebsmodus zu wechseln, wobei im dritten Betriebsmodus die elektrische Energie der Wechselstromquelle über die Stromversorgungsleitungen der elektrischen Last zugeführt ist und eine externe Gleichspannungsquelle an den DC-Zwischenkreis angeschlossen ist, welcher den elektrischen Energiespeicher auflädt, und wobei im vierten Betriebsmodus die externe Gleichspannungsquelle über den DC-Zwischenkreis dem Stromrichter Gleichstrom zuführt, wobei der Stromrichter als Wechselrichter betrieben ist und einen mit der Wechselstromquelle synchronisierten Wechselstrom an die Versorgungsleitungen liefert. Die Stromversorgungsanlage kann hierbei z.B. entsprechend dem in den Ausführungsbeispielen näher erläuterten Modus "ON/OFF GRID Betrieb" funktionieren.

Ergänzend oder alternativ kann die Steuereinrichtung ausgebildet sein, um in einen weiteren Betriebsmodus zu wechseln, in dem eine externe Gleichspannungsquelle an den DC-Zwischenkreis angeschlossen ist, welcher den elektrischen Energiespeicher auflädt und dem Stromrichter Gleichstrom zuführt, wobei der Stromrichter als Wechselrichter betrieben ist und einen mit der Wechselstromquelle synchronisierten Wechselstrom an die Versorgungsleitungen liefert, wobei die elektrische Last von dem Stromrichter mit Wechselstrom versorgt wird, solange der elektrische Energiespeicher geladen ist, und die elektrische Last von der Wechselstromquelle mit Wechselstrom versorgt wird, solange der elektrische Energiespeicher entladen ist. Die Stromversorgungsanlage kann hierbei z.B. entsprechend dem in den Ausführungsbeispielen näher erläuterten Modus "ON/OFF HYBRID Betrieb" funktionieren.

Gemäß einem zweiten Aspekt betrifft die Erfindung ein Verfahren zur Stromversorgung unter Verwendung einer erfindungsgemäßen Stromversorgungsanlage, wobei in einem ersten Betriebsmodus die elektrische Energie der Wechselstromquelle über die Stromversorgungsleitungen der elektrischen Last und dem Stromrichter zugeführt wird, welcher als Gleichrichter betrieben wird, den DC-Zwischenkreis mit Gleichstrom versorgt und den elektrischen Energiespeicher auflädt.

Ergänzend kann die elektrische Last in einem zweiten Betriebsmodus durch Auftrennen der elektrischen Verbindung zwischen dem Eingangsanschluss und dem Ausgangsanschluss vom Stromrichter mit Wechselstrom versorgt werden, wobei der Stromrichter als Wechselrichter betrieben wird und dem Stromrichter über den DC-Zwischenkreis Gleichstrom aus dem elektrischen Energiespeicher zugeführt wird.

Ergänzend oder alternativ kann in einem dritten Betriebsmodus die elektrische Energie der Wechselstromquelle über die Stromversorgungsleitungen der elektrischen Last zugeführt werden und eine externe Gleichspannungsquelle an den DC-Zwischenkreis angeschlossen sein, welcher den elektrischen Energiespeicher auflädt.

Ergänzend oder alternativ kann die externe Gleichspannungsquelle in einem vierten Betriebsmodus über den DC-Zwischenkreis dem Stromrichter Gleichstrom zuführen, wobei der Stromrichter als Wechselrichter betrieben wird und einen mit der Wechselstromquelle synchronisierten Wechselstrom an die Versorgungsleitungen liefert.

Ergänzend oder alternativ kann in einem weiteren Betriebsmodus eine externe Gleichspannungsquelle an den DC-Zwischenkreis angeschlossen sein, welcher den elektrischen Energiespeicher auflädt und dem Stromrichter Gleichstrom zuführt, wobei der Stromrichter als Wechselrichter betrieben wird und einen mit der Wechselstromquelle synchronisierten Wechselstrom an die Versorgungsleitungen liefert, wobei die elektrische Last von dem Stromrichter mit Wechselstrom versorgt wird, solange der elektrische Energiespeicher geladen ist, und die elektrische Last von der Wechselstromquelle mit Wechselstrom versorgt wird, solange der elektrische Energiespeicher entladen ist.

Die Erfindung wird nachfolgend anhand von in der Zeichnung schematisch dargestellten Ausführungsbeispielen näher erläutert. In dieser zeigen Fig. 1 ein Schaltbild einer ersten Ausführung der Stromversorgungsanlage, Fig. 2 ein Schaltbild einer zweiten Ausführung der Stromversorgungsanlage und Fig. 3 ein Schaltbild einer dritten Ausführung der Stromversorgungsanlage.

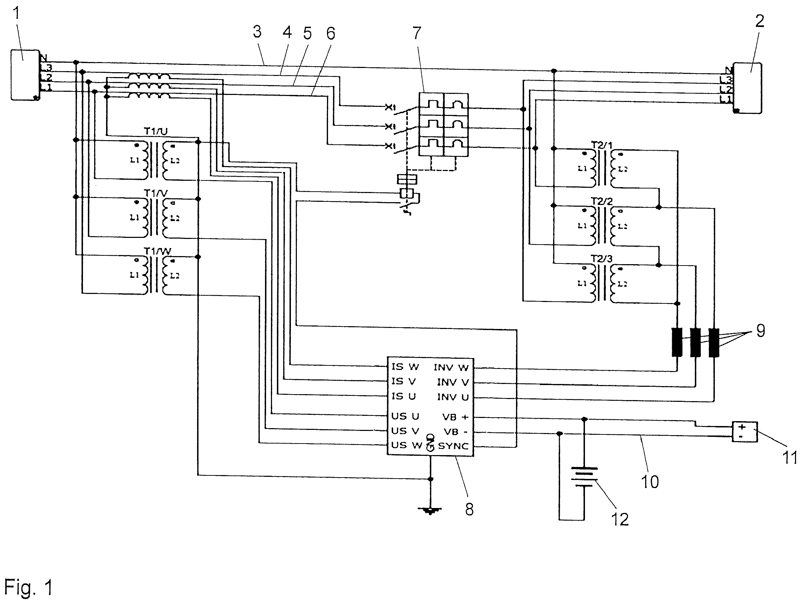

In Fig. 1 ist ein Eingangsanschluss zum Anschließen einer Wechselstromquelle mit 1 bezeichnet. Der Eingangsanschluss 1 ist zum Anschließen einer Dreiphasenwechselstromquelle, wie z.B. eines Dreiphasenwechselstrom-Versorgungsnetzes, ausgebildet und umfasst daher einen elektrischen Kontakt für den Neutralleiter N und drei elektrische Kontakte für die Phasenleiter L1, L2 und L3. Weiters ist ein Ausgangsanschluss 2 zum Anschließen einer nicht dargestellten elektrischen Last an den elektrischen Kontakten für den Neutralleiter N und für die Phasenleiter L1, L2 und L3 vorgesehen. Zur Verbindung des Eingangsanschlusses 1 mit dem Ausgangsanschluss 2 sind Stromversorgungsleitungen umfassend einen Neutralleiter 3 und drei Phasenleiter 4,5,6 vorgesehen. Die Phasenleiter 4,5,6 sind über eine Schaltereinrichtung 7 geführt, mit welcher die elektrische Verbindung zwischen dem Eingangsanschluss 1 und dem Ausgangsanschluss 2 unterbrochen werden kann. Der Stromrichter 8 weist einen Gleichstromanschluss umfassend die elektrischen Kontakte VB+ und VB- und einen Wechselstromanschluss umfassend die elektrischen Kontakte INV W, INV V und INV U auf. Der Stromrichter 8 ist mit seinem Wechselstromanschluss so an die Stromversorgungsleitungen 3,4,5,6 angeschlossen, dass der Wechselstromanschluss bei geschlossener Schaltereinrichtung 7 parallel zur Wechselstromquelle geschalten ist. Der Anschluss des Stromrichters 8 an Stromversorgungsleitungen erfolgt über die Anpasstransformatoren T2/1, T2/2 und T2/3, wobei die Anpasstransformatoren einerseits in Dreiecksschaltung an den Stromrichter 8 und andererseits in Sternschaltung an die Stromversorgungsleitungen 3,4,5,6 angeschlossen sind. In den Verbindungsleitungen zwischen den Anpasstransformatoren T2/1, T2/2 und T2/3 und dem Wechselstromanschluss des Stromrichters 8 sind Drosseleinrichtungen 9 angeordnet.

Am Gleichstromanschluss des Stromrichters 8 ist ein DC-Zwischenkreis 10 angeschlossen, der den Stromrichter 8 mit einer über den Anschluss 11 anschließbaren Gleichspannungsquelle, wie z.B. einer Photovoltaikanlage, verbindet. Weiters verfügt der DC-Zwischenkreis 10 über einen aufladbaren elektrischen Energiespeicher 12.

Zur Messung des durch die Phasenleiter 4,5,6 fließenden Stromes sind den Phasenleitern zugeordnete Strommesseinrichtungen 13 in Form von Spulen vorgesehen, die an die Messeingänge IS W, IS V und IS U des Stromrichters 8 angeschlossen sind. Zur Messung der zwischen den einzelnen Phasenleitern 4,5,6 und dem Neutralleiter 3 herrschenden Spannungen sind Spannungsmesseinrichtung vorgesehen, deren Spannungsabgriff über die Transformatoren T1/U, T1/V und T1/W den Messeingängen US U, US V bzw. US W des Stromrichters 8 zugeführt ist. Der Stromrichter 8 umfasst eine Steuereinrichtung, um die vom Stromrichter abgegebene Wechselspannung in Abhängigkeit von den Strom- und Spannungswerten zu regeln

Die in Fig. 1 beschriebene Stromversorgungsanlage ermöglicht das Versorgen von an den Ausgangsanschluss 2 angeschlossenen elektrischen Lasten in den nachfolgend beschriebenen Betriebsarten.

### 1. Inselbetrieb:

Im Inselbetrieb wird die elektrische Last aus dem Energiespeicher 12 versorgt, welcher ggf. von außen wiederum mit Energie versorgt werden muss. Der vom Energiespeicher 12 gelieferte Gleichstrom wird dem Stromrichter 8 über den Gleichstromanschluss zugeführt und der vom Stromrichter im Wechselrichterbetrieb erzeugte Wechselstrom wird bei offener Schaltereinrichtung 7, d.h. im von der externen Wechselstromquelle getrennten Zustand über die Stromversorgungsleitungen der elektrischen Last zur Verfügung gestellt. Die Spannung, die Frequenz, der Phasenwinkel, etc. des Wechselstroms werden durch die Steuereinheit, insbesondere durch Software definiert. In dieser Betriebsart wird die Energie aus dem Energiespeicher 12 in Richtung Verbraucher geführt. Eine parallele Rückladung ist nicht möglich.

### 2. USV Betrieb:

Im USV (UPS) Betrieb ist die Stromversorgungsanlage immer über den Eingangsanschluss 1 mit einem Energienetz verbunden und führt die Ausgangs-Wechselspannung des Stromrichters 8 der Netzspannung nach. Durch ein Überhöhen der Zwischenkreisspannung wird der Energiespeicher 12 immer in einem Vollzustand gehalten. Bei Verlust der Versorgungspannung oder bei Störung derselben wird die Stromversorgungsanlage mittels der Schaltereinrichtung 7 automatisch vom Energienetz getrennt und versorgt ihrerseits die Verbraucher weiter bis die Versorgungsspannung wieder in einem normalen Zustand ist. Die Versorgungsdauer ist abhängig von der Speichergröße des Energiespeichers 12 und der Last.

### 3. ON/OFF GRID Betrieb:

Im ON/OFF GRID Betrieb arbeitet die Stromversorgungsanlage in zwei Arten, welche ähnlich dem USV Betriebsmodus sind, jedoch wird der Energiespeicher 12 nicht vom Energienetz geladen, sondern von einer anderen Energiequelle versorgt, wie z.B. von einer nach dem Maximum Power Point Tracking (MPPT) arbeitenden, an den Anschluss 11 angeschlossenen Photovoltaik-Anlage. Ist der Energiespeicher 12 voll geladen und kann keine Energie mehr gespeichert werden, wird die überschüssige Energie ggf. ins Energienetz übertragen (bzw. eingespeist). Bei einem Netzausfall werden die Verbraucher wie auch im USV Modus aus dem Energiespeicher 12 versorgt. Per Software oder betreiberseitigem Einfluss ist es bei Bedarf aber auch immer möglich, den Energiespeicher 12 aus dem Energienetz zu laden (wie im USV Modus).

### 4. ON/OFF/HYBRID Betrieb:

Im ON/OFF/HYBRID Betrieb wird wie auch im ON/OFF GRID Betrieb gearbeitet, jedoch wird versucht die interne Verbraucherlast immer aus dem Energiespeicher 12 abzudecken und nur bei leerem Energiespeicher 12 auf Netzenergie zurückzugreifen. Das bedeutet, dass hier die Stromversorgungsanlage zwar grundsätzlich mit dem Energienetz verbunden ist, aber im Normalfall keine Energie aus dem Energienetz bezogen wird, sofern es der Ladezustand des Energiespeichers 12 zulässt. Erst wenn die Energie im Energiespeichers 12 erschöpft ist oder mehr Energie aus dem System angefordert wird als die Stromversorgungsanlage liefern kann, wird parallel auf Netzenergie zurückgegriffen. Primär wird aber immer die Energie aus dem Energiespeicher 12 zur Versorgung der Verbraucher bevorzugt. Die Ladung des Energiespeichers 12 erfolgt hier auch wie im ON/OFF GRID Modus per externer Ladung. Per Software oder Betreibereingriff ist es bei Bedarf aber auch hier immer möglich den Energiespeicher aus dem Energienetz zu laden (wie im USV Modus).

### 5. LOADSHAPING/ON/OFF/HYBRID Betrieb:

Im LOADSHAPING/ON/OFF/HYBRID Betrieb wird die Stromversorgungsanlage wie auch in den anderen Fällen zwischen Energienetz und Verbraucher geschaltet und ermöglicht wie vorher beschrieben alle möglichen Betriebsarten. Jedoch wird hier zusätzlich Wert auf eine "Entprellung", d.h. ein sehr schnelles Ausregeln von Lastspitzen, gelegt, was zur Folge hat, dass aus dem Energienetz nur begrenzte Lasten (bzw. Stromstärken) bezogen werden. Durch diesen Betriebsmodus ist es möglich Lasten parallel aus dem Energienetz und der Stromversorgungsanlage, d.h. aus dem Energiespeicher 12, zu versorgen. Es ist hier möglich einen Grenzwert für den Leitungsbezug aus dem Energienetz zu definieren, welcher im Normalfall nicht überschritten wird, da die Einrichtung unmittelbar bei Lasterkennung die Lieferung ins System nachregelt. Sollte die Gesamtleistung aller Systeme überschritten werden, kann mittels Software bestimmt werden wie mit diesem Szenario umgegangen wird bzw. welche Spitzenlast aus dem Energienetz für ggf. wenige Sekunden bezogen werden kann. Der Energiespeicher 12 wird hier immer sofort aus dem Energienetz nachgeladen wenn "Restenergie" zur Verfügung steht (also wenn der Energienetzbezug unter dem definierten Maximum ist). Es ist auch möglich den Energiespeicher wie in den oben beschriebenen Betriebsarten von extern zu laden. Der Vorteil des ON/OFF HYBRID Betriebs ist auch eine Versorgung der Lasten ohne Energienetz (also z.B. abstellen eines möglichen Generators) bis die Energiemenge im Energiespeicher 12 einen einstellbaren Wert unterschreitet.

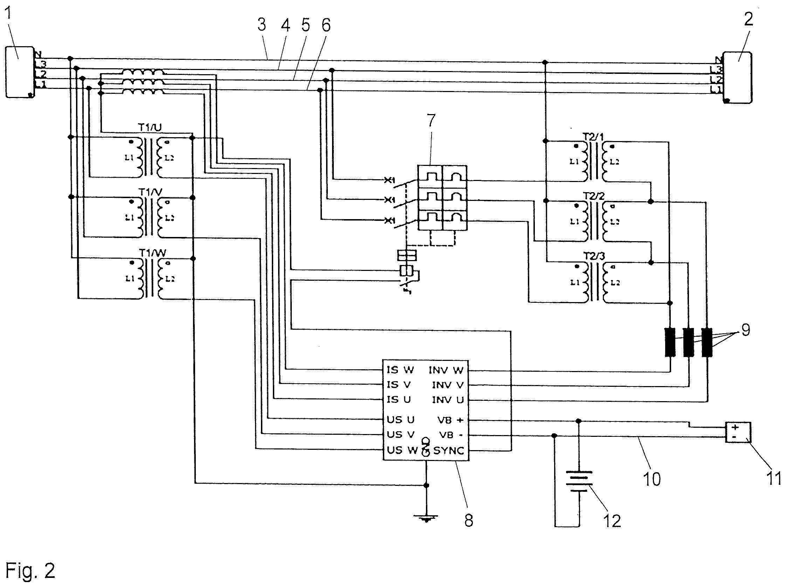

Die in Fig. 2 dargestellte Stromversorgungsanlage unterscheidet sich von der Stromversorgungsanlage gemäß Fig. 1 dadurch, dass die Stromversorgungsleitungen 4,5,6 nicht durch die Schaltereinrichtung 7 unterbrechbar sind, sodass eine ständige Stromverbindung zwischen dem Eingangsanschluss 1 und dem Ausgangsanschluss 2 besteht. Die Schaltereinrichtung 7 ist nun so angeordnet, dass damit die parallele Ankoppelung des Wechselstromanschlusses des Stromrichters 8 bzw. der diesem zugeordneten Anschlusstransformatoren an die Stromversorgungsleitungen 4,5,6 unterbrochen werden kann.

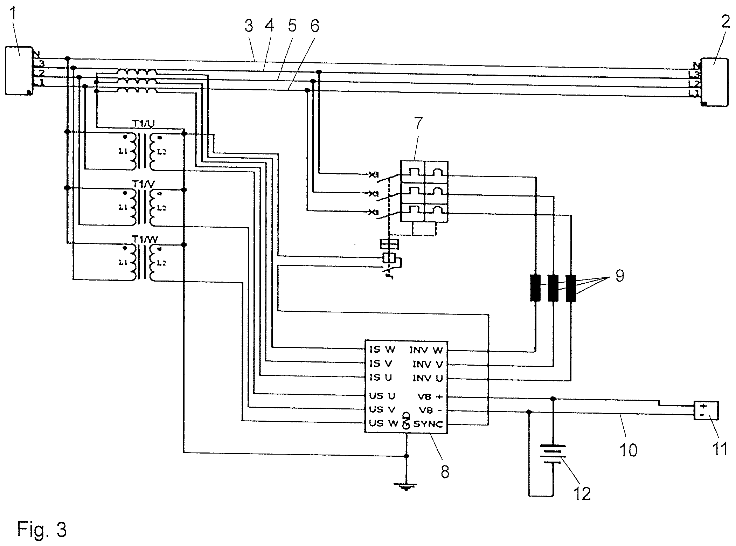

Die in Fig. 3 dargestellte Stromversorgungsanlage unterscheidet sich von der Stromversorgungsanlage gemäß Fig. 2 dadurch, dass der Wechselstromanschluss des Stromrichters 8 in Dreiecksschaltung mit den Phasenleitern 4,5,6 verbunden ist, sodass auf die Zwischenschaltung von Anschlusstransformatoren verzichtet werden kann.

Die Stromversorgungsanlage gemäß Fig. 2 und Fig. 3 kann für den nachfolgenden AC BUS HYBRID Betrieb verwendet werden.

### AC BUS HYBRID Betrieb:

Im AC BUS HYBRID Betrieb wird die Stromversorgungsanlage direkt mit dem Energienetz verbunden und ermöglicht die Unterstützung des Energienetzes ohne Schalteingriff aus dem Energiespeicher 12. Dieser Modus ermöglicht einen Loadshaping-Betrieb in Verteilernetzen und eine dezentrale Energiespeicherung z.B. bei an den Anschluss 11 angeschlossenen Photovoltaikanlagen oder Windanlagen. Sobald dabei Überschussenergie zur Verfügung steht, wird diese im Energiespeicher 12 abgelegt und im Tagesverlauf wieder ins Netz eingespeist. Ein Parallelschalten von mehreren AC BUS HYBRID Systemen ist ohne großen Aufwand jederzeit möglich, um die Leistungen wachsenden Anforderungen anzupassen. Die Stromversorgungsanlage regelt hier selbständig oder per Ferneingriff den Leistungsbezug oder die Lieferung. Wird ein einspeiseseitiger Lasttrenner eingesetzt, kann die Einrichtung zum AC OFF BUS HYBRID Betrieb erweitert werden und die lokalen Lasten im Störungsfall aus dem Energiespeicher 12 versorgen. Dann ist es z.B. möglich, kleine Gemeinden oder Betriebe (welche aus einer Mittelspannungsstation versorgt werden) weitgehend ohne Unterbrechung lokal weiter zu versorgen bis die Netzwiederkehr eintritt. In gesonderten Fällen wäre eine Rückspeisung in die Mittelspannung und damit eine Versorgung weiterer Stationen mit einem gewissen Schaltungsaufwand auch möglich. Wenn an anderen Mittelspannungsstationen auch AC BUS HYBRID Systeme im Einsatz sind, addieren sich dann die Leistungen selbstständig.

AC BUS HYBRID Systeme sind speziell in Kombination mit Hochstromsystemen geeignet, da kein Eingriff in die Hochstromwege notwendig ist, sondern die Einrichtung "nur" parallel dazu betrieben wird. Einzig eine Spannungsmessung bei vorgeschaltetem Trenner ist erforderlich, um ein rücksynchronisieren im AC OFF BUS MODUS zu ermöglichen.

Die vorgegebenen Abläufe der Steuereinrichtung der Stromversorgungsanlage sind bevorzugt als Software implementiert, welche mit den Hardwarekomponenten des Stromrichters sowie ggf. mit den Schaltereinrichtungen zusammenwirkt. Grundsätzlich kann die Steuerung bzw. Regelung nach dem folgenden Prinzip vorgenommen werden. In der Stromversorgungsanlage wird mittels Software ein rotierendes Drehzeiger-Netzabbild berechnet, welches grundlegend aus Frequenz, Spannung und ggf. Strom des Versorgungsnetzes besteht. Im reinen OFF GRID Betrieb wird per Software eine definierbare feste Ausgangsfrequenz sowie eine definierbare feste Ausgangsspannung ausgegeben. Die Phasenwinkel sind ebenfalls definierbar (US Netz: 2P/N 180° oder 3P 120°D/2N, EU und Rest der Welt: 3P/120° 3W/4W). Im USV Modus wird mittels Totbandverfahren der Strom berücksichtigt und durch ein Aufschwingen der Drossel im AC Weg eine Überhöhung der Zwischenkreisspannung zur Ladung ermöglicht. Eine Phasenregelschleife (engl.: phase-locked loop - PLL) ermöglicht ein phasensynchrones Arbeiten mit einer raschen Erkennbarkeit von Netzstörungen. Alle anderen Betriebsarten werden durch Verschieben der Arbeitspunkte und Spannungsgrößen ermöglicht, eine zusätzliche aktive Netzfilterung per bestehender Hardware wäre möglich.

## Patentansprüche

1. Stromversorgungsanlage umfassend einen Eingangsanschluss für eine Wechselstromquelle, einen Ausgangsanschluss zum Anschließen einer elektrischen Last, den Eingangsanschluss mit dem Ausgangsanschluss verbindende Stromversorgungsleitungen, umfassend wenigstens einen Phasenleiter und einen Neutralleiter, und wenigstens einen Stromrichter mit einem Gleichstrom- und einem Wechselstromanschluss, wobei der Wechselstromanschluss mit der elektrischen Last verbindbar ist und wobei mit dem Gleichstromanschluss ein DC-Zwischenkreis verbunden ist, an den wenigstens ein aufladbarer elektrischer Energiespeicher angeschlossen ist, und wobei eine Steuereinrichtung vorgesehen ist, um die vom Stromrichter über den Wechselstromanschluss abgebbare Wechselspannung zu steuern, **dadurch gekennzeichnet, dass** der Stromrichter mit seinem Wechselstromanschluss parallel zur Wechselstromquelle an die Stromversorgungsleitungen angeschlossen ist und dass wenigstens eine Strommesseinrichtung und wenigstens eine Spannungsmesseinrichtung zur Messung von Strom- und Spannungswerten der Wechselstromquelle vorgesehen sind, welche der Steuereinrichtung zugeführt sind, um die vom Stromrichter abgegebene Wechselspannung in Abhängigkeit von den Strom- und Spannungswerten zu regeln.

2. Stromversorgungsanlage nach Anspruch 1, **dadurch gekennzeichnet, dass** der Stromrichter als bidirektionaler Stromrichter ausgebildet ist.

3. Stromversorgungsanlage nach Anspruch 1 oder 2, **dadurch gekennzeichnet, dass** der Eingangsanschluss zum Anschließen einer Dreiphasenwechselstromquelle ausgebildet ist, wobei die den Eingangsanschluss mit dem Ausgangsanschluss verbindenden Stromversorgungsleitungen drei Phasenleiter und einen Neutralleiter umfassen.

4. Stromversorgungsanlage nach Anspruch 3, **dadurch gekennzeichnet, dass** der Stromrichter zur Umwandlung eines Gleichstroms in einen Dreiphasenwechselstrom und/oder zur Umwandlung eines Dreiphasenwechselstroms in einen Gleichstrom ausgebildet ist und der Wechselstromanschluss des Stromrichters als Dreiphasenwechselstromanschluss ausgebildet ist.

5. Stromversorgungsanlage nach einem der Ansprüche 1 bis 4, **dadurch gekennzeichnet, dass** der Wechselstromanschluss, insbesondere der Dreiphasenwechselstromanschluss, über wenigstens einen Anpasstransformator an die Stromversorgungsleitungen angeschlossen ist.

6. Stromversorgungsanlage nach Anspruch 5, **dadurch gekennzeichnet, dass** der Anpasstransformator auf Seite der Stromversorgungsleitungen mittels Sternschaltung und auf Seite des Stromrichters mittels Dreiecksschaltung verschaltet ist.

7. Stromversorgungsanlage nach Anspruch 5 oder 6, **dadurch gekennzeichnet, dass** der Anpasstransformator unter Zwischenschaltung einer Drosseleinrichtung mit dem Wechselstromanschluss des Stromrichters verbunden ist.

8. Stromversorgungsanlage nach einem der Ansprüche 1 bis 7, **dadurch gekennzeichnet, dass** eine Schaltereinrichtung vorgesehen ist, um die Verbindung zwischen dem Wechselstromanschluss des Stromrichters und den Stromversorgungsleitungen wahlweise zu trennen oder zu schließen.

9. Stromversorgungsanlage nach einem der Ansprüche 1 bis 8, **dadurch gekennzeichnet, dass** eine Schaltereinrichtung vorgesehen ist, um die elektrische Verbindung zwischen dem Eingangsanschluss und dem Ausgangsanschluss über den wenigstens einen Phasenleiter wahlweise zu trennen oder zu schließen.

10. Stromversorgungsanlage nach Anspruch 8 oder 9, **dadurch gekennzeichnet, dass** die Schaltereinrichtung von der Steuereinrichtung umschaltbar ist.

11. Stromversorgungsanlage nach einem der Ansprüche 1 bis 10, **dadurch gekennzeichnet, dass** der DC-Zwischenkreis einen Anschluss zum Anschließen einer Gleichspannungsquelle, wie z.B. einer Photovoltaikanlage, aufweist, wobei die Gleichspannungsquelle bevorzugt unter Zwischenschaltung eines Gleichspannungswandlers anschließbar ist.

12. Stromversorgungsanlage nach einem der Ansprüche 1 bis 11, **dadurch gekennzeichnet, dass** die Steuereinrichtung ausgebildet ist, um zwischen einem ersten und einem zweiten Betriebsmodus der Stromversorgungsanlage zu wechseln, wobei im ersten Betriebsmodus die elektrische Energie der Wechselstromquelle über die Stromversorgungsleitungen der elektrischen Last und dem Stromrichter zugeführt ist, welcher als Gleichrichter betrieben ist und den DC-Zwischenkreis mit Gleichstrom versorgt und den elektrischen Energiespeicher auflädt, und im zweiten Betriebsmodus die elektrische Last durch Auftrennen der elektrischen Verbindung zwischen dem Eingangsanschluss und dem Ausgangsanschluss vom Stromrichter mit Wechselstrom versorgt wird, wobei der Stromrichter als Wechselrichter betrieben ist und dem Stromrichter über den DC-Zwischenkreis Gleichstrom aus dem elektrischen Energiespeicher zugeführt wird.

13. Stromversorgungsanlage nach einem der Ansprüche 1 bis 12, **dadurch gekennzeichnet, dass** die Steuereinrichtung ausgebildet ist, um zwischen einem dritten und einem vierten Betriebsmodus zu wechseln, wobei im dritten Betriebsmodus die elektrische Energie der Wechselstromquelle über die Stromversorgungsleitungen der elektrischen Last zugeführt ist und eine externe Gleichspannungsquelle an den DC-Zwischenkreis angeschlossen ist, welcher den elektrischen Energiespeicher auflädt, und wobei im vierten Betriebsmodus die externe Gleichspannungsquelle über den DC-Zwischenkreis dem Stromrichter Gleichstrom zuführt, wobei der Stromrichter als Wechselrichter betrieben ist und einen mit der Wechselstromquelle synchronisierten Wechselstrom an die Versorgungsleitungen liefert.

14. Stromversorgungsanlage nach einem der Ansprüche 1 bis 13, **dadurch gekennzeichnet, dass** die Steuereinrichtung ausgebildet ist, um in einen weiteren Betriebsmodus zu wechseln, in dem eine externe Gleichspannungsquelle an den DC-Zwischenkreis angeschlossen ist, welcher den elektrischen Energiespeicher auflädt und dem Stromrichter Gleichstrom zuführt, wobei der Stromrichter als Wechselrichter betrieben ist und einen mit der Wechselstromquelle synchronisierten Wechselstrom an die Versorgungsleitungen liefert, wobei die elektrische Last von dem Stromrichter mit Wechselstrom versorgt wird, solange der elektrische Energiespeicher geladen ist, und die elektrische Last von der Wechselstromquelle mit Wechselstrom versorgt wird, solange der elektrische Energiespeicher entladen ist.

15. Verfahren zur Stromversorgung unter Verwendung einer Stromversorgungsanlage nach einem der Ansprüche 1 bis 14, **dadurch gekennzeichnet, dass** in einem ersten Betriebsmodus die elektrische Energie der Wechselstromquelle über die Stromversorgungsleitungen der elektrischen Last und dem Stromrichter zugeführt wird, welcher als Gleichrichter betrieben wird, den DC-Zwischenkreis mit Gleichstrom versorgt und den elektrischen Energiespeicher auflädt.

16. Verfahren nach Anspruch 15, **dadurch gekennzeichnet, dass** in einem zweiten Betriebsmodus die elektrische Last durch Auftrennen der elektrischen Verbindung zwischen dem Eingangsanschluss und dem Ausgangsanschluss vom Stromrichter mit Wechselstrom versorgt wird, wobei der Stromrichter als Wechselrichter betrieben wird und dem Stromrichter über den DC-Zwischenkreis Gleichstrom aus dem elektrischen Energiespeicher zugeführt wird.

17. Verfahren nach Anspruch 15 oder 16, **dadurch gekennzeichnet, dass** in einem dritten Betriebsmodus die elektrische Energie der Wechselstromquelle über die Stromversorgungsleitungen der elektrischen Last zugeführt wird und eine externe Gleichspannungsquelle an den DC-Zwischenkreis angeschlossen ist, welcher den elektrischen Energiespeicher auflädt.

18. Verfahren nach Anspruch 15, 16 oder 17, **dadurch gekennzeichnet, dass** in einem vierten Betriebsmodus die externe Gleichspannungsquelle über den DC-Zwischenkreis dem Stromrichter Gleichstrom zuführt, wobei der Stromrichter als Wechselrichter betrieben wird und einen mit der Wechselstromquelle synchronisierten Wechselstrom an die Versorgungsleitungen liefert.

19. Verfahren nach einem der Ansprüche 15 bis 18, **dadurch gekennzeichnet, dass** in einem weiteren Betriebsmodus eine externe Gleichspannungsquelle an den DC-Zwischenkreis angeschlossen ist, welcher den elektrischen Energiespeicher auflädt und dem Stromrichter Gleichstrom zuführt, wobei der Stromrichter als Wechselrichter betrieben wird und einen mit der Wechselstromquelle synchronisierten Wechselstrom an die Versorgungsleitungen liefert, wobei die elektrische Last von dem Stromrichter mit Wechselstrom versorgt wird, solange der elektrische Energiespeicher geladen ist, und die elektrische Last von der Wechselstromquelle mit Wechselstrom versorgt wird, solange der elektrische Energiespeicher entladen ist.

## Geänderte Patentansprüche

### Geänderte Patentansprüche gemäss Regel 137(2) EPÜ.

1. Stromversorgungsanlage umfassend einen Eingangsanschluss (1) für eine Wechselstromquelle, einen Ausgangsanschluss (2) zum Anschließen einer elektrischen Last, den Eingangsanschluss (1) mit dem Ausgangsanschluss (2) verbindende Stromversorgungsleitungen, umfassend wenigstens einen Phasenleiter (4,5,6) und einen Neutralleiter (3), und wenigstens einen Stromrichter (8) mit einem Gleichstrom- und einem Wechselstromanschluss, wobei der Wechselstromanschluss mit der elektrischen Last verbindbar ist und wobei mit dem Gleichstromanschluss ein DC-Zwischenkreis (10) verbunden ist, an den wenigstens ein aufladbarer elektrischer Energiespeicher (12) angeschlossen ist, und wobei eine Steuereinrichtung vorgesehen ist, um die vom Stromrichter (8) über den Wechselstromanschluss abgebbare Wechselspannung zu steuern, **dadurch gekennzeichnet, dass** der Stromrichter (8) mit seinem Wechselstromanschluss parallel zur Wechselstromquelle an die Stromversorgungsleitungen angeschlossen ist und dass wenigstens eine Strommesseinrichtung (13) und wenigstens eine Spannungsmesseinrichtung zur Messung von Strom- und Spannungswerten der Wechselstromquelle vorgesehen sind, welche der Steuereinrichtung zugeführt sind, um die vom Stromrichter (8) abgegebene Wechselspannung in Abhängigkeit von den Strom- und Spannungswerten zu regeln.

2. Stromversorgungsanlage nach Anspruch 1, **dadurch gekennzeichnet, dass** der Stromrichter (8) als bidirektionaler Stromrichter ausgebildet ist.

3. Stromversorgungsanlage nach Anspruch 1 oder 2, **dadurch gekennzeichnet, dass** der Eingangsanschluss (1) zum Anschließen einer Dreiphasenwechselstromquelle ausgebildet ist, wobei die den Eingangsanschluss (1) mit dem Ausgangsanschluss (2) verbindenden Stromversorgungsleitungen drei Phasenleiter (4,5,6) und einen Neutralleiter (3) umfassen.

4. Stromversorgungsanlage nach Anspruch 3, **dadurch gekennzeichnet, dass** der Stromrichter (8) zur Umwandlung eines Gleichstroms in einen Dreiphasenwechselstrom und/oder zur Umwandlung eines Dreiphasenwechselstroms in einen Gleichstrom ausgebildet ist und der Wechselstromanschluss des Stromrichters (8) als Dreiphasenwechselstromanschluss ausgebildet ist.

5. Stromversorgungsanlage nach einem der Ansprüche 1 bis 4, **dadurch gekennzeichnet, dass** der Wechselstromanschluss, insbesondere der Dreiphasenwechselstromanschluss, über wenigstens einen Anpasstransformator an die Stromversorgungsleitungen angeschlossen ist.

6. Stromversorgungsanlage nach Anspruch 5, **dadurch gekennzeichnet, dass** der Anpasstransformator auf Seite der Stromversorgungsleitungen mittels Sternschaltung und auf Seite des Stromrichters (8) mittels Dreiecksschaltung verschaltet ist.

7. Stromversorgungsanlage nach Anspruch 5 oder 6, **dadurch gekennzeichnet, dass** der Anpasstransformator unter Zwischenschaltung einer Drosseleinrichtung (9) mit dem Wechselstromanschluss des Stromrichters (8) verbunden ist.

8. Stromversorgungsanlage nach einem der Ansprüche 1 bis 7, **dadurch gekennzeichnet, dass** eine Schaltereinrichtung (7) vorgesehen ist, um die Verbindung zwischen dem Wechselstromanschluss des Stromrichters (8) und den Stromversorgungsleitungen wahlweise zu trennen oder zu schließen.

9. Stromversorgungsanlage nach einem der Ansprüche 1 bis 8, **dadurch gekennzeichnet, dass** eine Schaltereinrichtung (7) vorgesehen ist, um die elektrische Verbindung zwischen dem Eingangsanschluss (1) und dem Ausgangsanschluss (2) über den wenigstens einen Phasenleiter (4,5,6) wahlweise zu trennen oder zu schließen.

10. Stromversorgungsanlage nach Anspruch 8 oder 9, **dadurch gekennzeichnet, dass** die Schaltereinrichtung (7) von der Steuereinrichtung umschaltbar ist.

11. Stromversorgungsanlage nach einem der Ansprüche 1 bis 10, **dadurch gekennzeichnet, dass** der DC-Zwischenkreis (10) einen Anschluss (11) zum Anschließen einer Gleichspannungsquelle, wie z.B. einer Photovoltaikanlage, aufweist, wobei die Gleichspannungsquelle bevorzugt unter Zwischenschaltung eines Gleichspannungswandlers anschließbar ist.

12. Stromversorgungsanlage nach einem der Ansprüche 1 bis 11, **dadurch gekennzeichnet, dass** die Steuereinrichtung ausgebildet ist, um zwischen einem ersten und einem zweiten Betriebsmodus der Stromversorgungsanlage zu wechseln, wobei im ersten Betriebsmodus die elektrische Energie der Wechselstromquelle über die Stromversorgungsleitungen der elektrischen Last und dem Stromrichter (8) zugeführt ist, welcher als Gleichrichter betrieben ist und den DC-Zwischenkreis (10) mit Gleichstrom versorgt und den elektrischen Energiespeicher (12) auflädt, und im zweiten Betriebsmodus die elektrische Last durch Auftrennen der elektrischen Verbindung zwischen dem Eingangsanschluss (1) und dem Ausgangsanschluss (2) vom Stromrichter (8) mit Wechselstrom versorgt wird, wobei der Stromrichter (8) als Wechselrichter betrieben ist und dem Stromrichter (8) über den DC-Zwischenkreis (10) Gleichstrom aus dem elektrischen Energiespeicher (12) zugeführt wird.

13. Stromversorgungsanlage nach einem der Ansprüche 1 bis 12, **dadurch gekennzeichnet, dass** die Steuereinrichtung ausgebildet ist, um zwischen einem dritten und einem vierten Betriebsmodus zu wechseln, wobei im dritten Betriebsmodus die elektrische Energie der Wechselstromquelle über die Stromversorgungsleitungen der elektrischen Last zugeführt ist und eine externe Gleichspannungsquelle an den DC-Zwischenkreis (10) angeschlossen ist, welcher den elektrischen Energiespeicher (12) auflädt, und wobei im vierten Betriebsmodus die externe Gleichspannungsquelle über den DC-Zwischenkreis (10) dem Stromrichter (8) Gleichstrom zuführt, wobei der Stromrichter (8) als Wechselrichter betrieben ist und einen mit der Wechselstromquelle synchronisierten Wechselstrom an die Versorgungsleitungen liefert.

14. Stromversorgungsanlage nach einem der Ansprüche 1 bis 13, **dadurch gekennzeichnet, dass** die Steuereinrichtung ausgebildet ist, um in einen weiteren Betriebsmodus zu wechseln, in dem eine externe Gleichspannungsquelle an den DC-Zwischenkreis (10) angeschlossen ist, welcher den elektrischen Energiespeicher (12) auflädt und dem Stromrichter (8) Gleichstrom zuführt, wobei der Stromrichter (8) als Wechselrichter betrieben ist und einen mit der Wechselstromquelle synchronisierten Wechselstrom an die Versorgungsleitungen liefert, wobei die elektrische Last von dem Stromrichter (8) mit Wechselstrom versorgt wird, solange der elektrische Energiespeicher (12) geladen ist, und die elektrische Last von der Wechselstromquelle mit Wechselstrom versorgt wird, solange der elektrische Energiespeicher (12) entladen ist.

15. Verfahren zur Stromversorgung unter Verwendung einer Stromversorgungsanlage nach einem der Ansprüche 1 bis 14, **dadurch gekennzeichnet, dass** in einem ersten Betriebsmodus die elektrische Energie der Wechselstromquelle über die Stromversorgungsleitungen der elektrischen Last und dem Stromrichter (8) zugeführt wird, welcher als Gleichrichter betrieben wird, den DC-Zwischenkreis (10) mit Gleichstrom versorgt und den elektrischen Energiespeicher (12) auflädt.

16. Verfahren nach Anspruch 15, **dadurch gekennzeichnet, dass** in einem zweiten Betriebsmodus die elektrische Last durch Auftrennen der elektrischen Verbindung zwischen dem Eingangsanschluss (1) und dem Ausgangsanschluss (2) vom Stromrichter (8) mit Wechselstrom versorgt wird, wobei der Stromrichter (8) als Wechselrichter betrieben wird und dem Stromrichter (8) über den DC-Zwischenkreis (10) Gleichstrom aus dem elektrischen Energiespeicher (12) zugeführt wird.

17. Verfahren nach Anspruch 15 oder 16, **dadurch gekennzeichnet, dass** in einem dritten Betriebsmodus die elektrische Energie der Wechselstromquelle über die Stromversorgungsleitungen der elektrischen Last zugeführt wird und eine externe Gleichspannungsquelle an den DC-Zwischenkreis (10) angeschlossen ist, welcher den elektrischen Energiespeicher (12) auflädt.

18. Verfahren nach Anspruch 15, 16 oder 17, **dadurch gekennzeichnet, dass** in einem vierten Betriebsmodus die externe Gleichspannungsquelle über den DC-Zwischenkreis (10) dem Stromrichter (8) Gleichstrom zuführt, wobei der Stromrichter (8) als Wechselrichter betrieben wird und einen mit der Wechselstromquelle synchronisierten Wechselstrom an die Versorgungsleitungen liefert.

19. Verfahren nach einem der Ansprüche 15 bis 18, **dadurch gekennzeichnet, dass** in einem weiteren Betriebsmodus eine externe Gleichspannungsquelle an den DC-Zwischenkreis (10) angeschlossen ist, welcher den elektrischen Energiespeicher (12) auflädt und dem Stromrichter (8) Gleichstrom zuführt, wobei der Stromrichter (8) als Wechselrichter betrieben wird und einen mit der Wechselstromquelle synchronisierten Wechselstrom an die Versorgungsleitungen liefert, wobei die elektrische Last von dem Stromrichter (8) mit Wechselstrom versorgt wird, solange der elektrische Energiespeicher (12) geladen ist, und die elektrische Last von der Wechselstromquelle mit Wechselstrom versorgt wird, solange der elektrische Energiespeicher (12) entladen ist.
